# FASCICULE DE BREVET EUROPEEN

(11) **EP 2 328 299 B1**
(45) Date de publication et mention de la délivrance du brevet: **21.02.2018**
(21) Numéro de dépôt: 10191760.7
(22) Date de dépôt: 18.11.2010
(51) Int. Cl.: H04L 12/24, H04L 12/26

(54) **Serveur de mesure de performances et de suivi de la qualité de service utilisant une interface de ligne de commande**
Server Performance Messung und Überwachung der Diestqualität durch Command Line Interface Befehlen.
SERVER PERFORMANCE MEASUREMENT AND MONITORING OF THE QUALITY OF SERVICE USING COMMAND LINE INTERFACE.

(30) Priorité: 19.11.2009 FR 0958164
(43) Date de publication de la demande: 01.06.2011
(73) Titulaire: InfoVista SAS, 91300 Massy (FR)
(72) Inventeur: Bouchex Bellomié, Sébastien, 92170 VANVES (FR)
(74) Mandataire: Pontet Allano & Associes

(56) Documents cités:
- WO-A1-01/06415
- US-A1- 2003 069 955
- US-A1- 2004 204 778
- US-A1- 2008 137 549

## Description

La présente invention concerne un serveur de mesure des performances et de suivi de la qualité de service apte à collecter des informations de performance au sein d'un ensemble d'équipements à travers un réseau de communication, ce serveur comprenant un modèle de performance générique pour traiter des indicateurs de haut niveau et des modèles de performance dédiés à chaque type d'équipement à surveiller.

La complexité croissante des systèmes d'information qui intègrent notamment des architectures clients-serveurs et des réseaux locaux intégrés, rend de plus en plus difficile une gestion efficace de la qualité de service au sein de ces systèmes. D'une part, les administrateurs et responsables de ces systèmes d'information sont amenés à adopter une démarche de service à l'égard des utilisateurs et à opérer en tant que prestataires de service soucieux de la qualité des services fournis tout en étant confrontés à des réductions de coût d'exploitation, et d'autre part, les utilisateurs de ces services réclament des niveaux de qualité de service toujours plus élevés.

La maîtrise de la qualité de service implique un système fiable de remontée des informations pertinentes en provenance des différentes ressources du système d'information. Il est cependant ardu d'exploiter des gisements de données de performance de grand volume résidant dans les équipements d'un réseau, dans les systèmes et dans les applications logicielles, de consolider ces données, puis de les restituer sous forme de tableaux de bord synthétiques à des fins de gestion de capacité ou de qualité de service. Il est recherché, d'une part, une gestion de la qualité de service au niveau de l'utilisateur: disponibilité, temps de réponse applicatif, réactivité face à un incident d'un support technique, et d'autre part, une gestion de la qualité de service technique relative à l'infrastructure elle-même: trafic, temps de transit réseau, consommation en temps d'unité centrale, etc.

Par ailleurs, il existe de nombreux systèmes d'exploitation différents. Pour pouvoir gérer le plus grand nombre de ressources, on est parfois amené à élaborer une application dédiée à chaque système d'exploitation. Ces applications ayant pour but de permettre la communication entre la ressource à gérer (équipement réseau) et le serveur de gestion distant. Dans ce sens, on connaît par exemple l'application Patrol de BMC Software® qui nécessite d'être installée, configurée et administrée dans l'équipement réseau qui peut être un noeud d'interconnexion subissant une charge importante. Une telle application est fortement intrusive et cela constitue une contrainte non négligeable qui peut présenter des risques d'incompatibilité ou du moins de perturbation du système d'exploitation de l'équipement réseau. Une telle implémentation ne présente pas des garanties de stabilité maximum.

WO 01/06415 décrit un modèle de prédiction des performances d'un réseau ainsi que la calibration de ce modèle en utilisant une analyse statistique de la charge de ce réseau. Un modèle SNMP est décrit.

US 2008/0137549 décrit un système de gestion de performance au sein d'un réseau de type IPTV.

On connaît également l'agent SNMP (« Simple Network Management Protocol ») permettant l'administration distante ou locale sur des réseaux de type Internet. Cette méthode expose un certain nombre d'informations via des fichiers MIB spécifique à chaque matériel et constructeur.

Or, il arrive que :
- certains équipements n'aient pas d'interface SNMP permettant la récolte de données de performance,
- des équipements soient dotés d'un agent SNMP, mais que certaines données de performance ne soient pas accessibles via cet agent SNMP,
- certaines données de performance ne soient plus accessibles en SNMP par évolution des logiciels utilisés sur les équipements ou par contraintes de sécurité.

La présente invention vise à pallier les inconvénients ci-dessus en proposant un nouveau serveur pour remonter l'ensemble des informations pertinentes depuis tout type d'équipement. Un autre but de l'invention est de proposer un serveur peu intrusif.

On atteint au moins l'un des objectifs précités avec un serveur de mesure de performances et de suivi de la qualité de service apte à collecter des informations de performance au sein d'un ensemble d'équipements à travers un réseau de communication, ce serveur comprenant :
- un modèle de performance générique pour
   - élaborer des requêtes d'acquisition de données de performance au sein desdits équipements
   - calculer des Indicateurs de performance à partir desdites données de performance, et
   - fournir des rapports de performance et/ou de qualité de service,
- un modèle de performance dédié pour chaque type d'équipement ; pour un équipement donné, ce modèle de performance étant apte à acquérir des données de performance depuis ledit équipement donné en réponse aux requêtes d'acquisition,
- un modèle SNMP, intercalé entre le modèle de performance dédié et l'équipement donné, pour communiquer par requête SNMP avec un agent SNMP de l'équipement donné, et transmettre des données de performance reçues depuis cet équipement donné vers le modèle de performance dédié selon un protocole spécifique.

Selon l'invention, le serveur comprend en outre, parallèlement au modèle SNMP,
- un modèle d'interfaçage, dit modèle CLI, intercalé entre le modèle de performance dédié et l'équipement donné, pour communiquer selon un mécanisme d'Interface de Ligne de Commande CLI (« Command Line Interface ») avec un agent CLI dudit équipement donné ; ce modèle CLI étant apte à générer des scripts de commande vers l'agent CLI et transmettre des données de performance reçues depuis l'équipement donné vers le modèle de performance dédié ; ce modèle CLI communiquant avec le modèle de performance dédié selon ledit protocole spécifique.

Par type d'équipement on entend par exemple un classement par différents constructeurs d'équipement, cet équipement pouvant être un routeur, un switch ou tout autre équipement réseau.

Avec le serveur selon l'invention, on a la possibilité de collecter des informations au sein de tout type d'équipement soit selon le protocole SNMP soit selon le protocole CLI, de façon successive ou de façon simultanée. On a ainsi accès, avec un même serveur de mesure des performances, à des informations de performance non accessible avec le protocole SNMP, ou au sein d'équipement ne proposant pas ce protocole SNMP.

Les indicateurs de performance sont des indicateurs haut-niveau tels que le trafic, le taux d'erreur, la consommation de la bande passante, le taux d'utilisation des disques durs, le taux d'utilisation des mémoires... qui sont indépendants du type d'équipement à sonder. Alors que la couche logicielle comprenant les modèles de performance dédiés est une couche logicielle orientée matériel. Chaque modèle de performance dédié utilise des indicateurs spécifiques à un équipement donné. Ainsi, en fonction des versions des logiciels fonctionnant sur les équipements, l'utilisateur peut choisir d'utiliser le modèle SNMP ou le modèle CLI tout en utilisant les Indicateurs de performance de haut-niveau comme il en a l'habitude. En fonction de l'équipement à sonder, le serveur interprète ces Indicateurs de performance haut-niveau pour interroger convenablement l'équipement via SNMP ou via CLI.

Le modèle CLI est intelligemment intégré dans le serveur de mesure des performances car il utilise le même langage que le modèle SNMP pour communiquer avec le modèle de performance dédié. L'ensemble constitue alors un méta-modèle complet multi constructeurs. Il n'est pas nécessaire de développer et déployer au sein des équipements des applications nouvelles (« API ») pour palier l'insuffisance du protocole SNMP. On reste peu intrusif en utilisant avantageusement un protocole CLI qui fait partie des composants de base de tout système d'exploitation et qui est présent dans tout équipement réseau.

Le modèle CLI communique avec l'agent CLI de l'équipement en utilisant le protocole CLI qui intègre les services tels que SSH ou Telnet. Cela nécessite un plus grand contrôle de l'utilisation des ressources de l'équipement sous surveillance que le SNMP. En effet le SNMP est par définition un protocole léger utilisant peu de ressource système (pas de connexion permanente, peu de trafic) alors que le protocole CLI utilise une connexion permanente et peut donc potentiellement consommer plus de ressources suivant les commandes exécutées.

Afin de gérer ces problématiques d'utilisation de ressources et limiter l'impact des commandes sur l'équipement qui doit principalement consacrer ses ressources (Processeur, mémoire) pour ses fonctions principales, le modèle d'interfaçage selon l'invention comprend :
- un module de commande pour communiquer avec l'agent CLI de l'équipement donné, et
- au moins un module d'analyse pour analyser le résultat transmis par l'agent CLI.

Avec le procédé selon l'invention, on peut définir un mode connecté pour lequel on communique avec l'agent CLI de l'équipement, et un mode non connecté au cours duquel on analyse le message provenant de l'équipement de façon à identifier des informations utiles. Ces informations utiles peuvent être un nombre d'octets transitant via un équipement, un rapport entre l'espace mémoire disponible et non disponible,... Cela permet d'économiser les ressources de l'équipement sous surveillance qui ne sont sollicité que lors du mode connecté.

On peut éventuellement envisager plusieurs modules d'analyse qui seraient configurés pour analyser simultanément plusieurs types différents de données de performance contenues dans un même message retourné par l'agent CLI.

Selon une caractéristique avantageuse de l'invention, le script de commande peut comprendre une unique commande associée à un groupe de variables pour collecter en même temps au moins autant de données de performance que de variables.

En particulier, lorsque les scripts de commande comprennent des variables multidimensionnelles, le modèle CLI est configuré pour recevoir des données de performance et :
- découper en bloc uniquement des données indexées,
- extraire des valeurs d'index, et
- extraire des valeurs des variables.

Selon une autre caractéristique avantageuse de l'invention, le script de commande comprend une commande qui peut être paramétrée de façon à collecter un tableau indexé ou une partie de ce tableau indexé.

En complément notamment de ce qui précède, toujours en vue de limiter l'intrusion au sein de l'équipement, le serveur selon l'invention prévoit que :
- chaque modèle d'interfaçage soit configuré de façon à ne pas dépasser un nombre prédéterminé de connexions simultanées à un équipement donné.
- chaque modèle d'interfaçage est configuré de façon à ne pas dépasser un taux prédéterminé d'exécution de commandes sur un équipement donné.
- chaque modèle d'interfaçage est configuré de façon à ne pas dépasser un délai prédéterminé de déconnexion depuis un équipement après l'exécution d'un ensemble de commandes.

D'autres avantages et caractéristiques de l'invention apparaîtront à l'examen de la description détaillée d'un mode de mise en oeuvre nullement limitatif, et des dessins annexés, sur lesquels :
La figure 1 est une vue générale d'un système mettant en oeuvre un procédé selon la présente invention,
La figure 2 est une vue générale d'un modèle CLI selon l'invention,
La figure 3 est une représentation schématique d'un méta modèle selon l'invention ;
La figure 4 est une vue d'une fenêtre graphique illustrant la décomposition des commandes en groupes de variables ;
La figure 5 est une représentation schématique illustrant des blocs fonctionnels d'un processus d'extraction de données utiles selon l'invention, et
Les figures 6 et 7 sont des vues de fenêtres graphiques illustrant les scripts d'extraction des blocs, des variables et des index conformément à la figure 4.

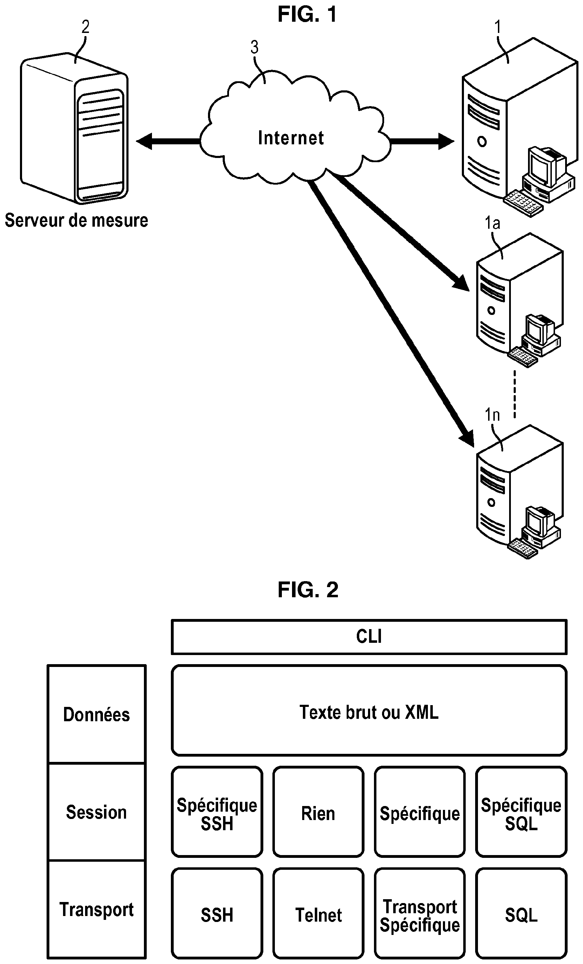

Sur la figure 1 on voit un serveur cible 1 pour lequel on souhaite mesurer de façon permanente les performances et la qualité. D'autres serveurs cibles 1a-1n peuvent également être contrôlés. Le serveur de gestion 2 selon l'invention est relié aux serveurs cibles via un réseau de communication 3 tel que le réseau Internet ou un réseau local et est prévu pour gérer la performance et la qualité de service des serveurs cibles. On peut notamment mesurer :
- la consommation mémoire,
- l'activité du processeur, et
- l'activité des disques.

Pour réaliser ces mesures, la présente invention prévoit d'utiliser une interface de commande CLI qui n'est pas initialement prévu pour récupérer des données de performance.

D'une façon générale, CLI (« Command Line Interface » ou invite de commandes) est une interface de configuration des équipements réseau, et permet en autre, d'effectuer la configuration de l'équipement ainsi que la maintenance au jour le jour.

CLI est un mécanisme permettant d'interagir avec un système d'exploitation ou des logiciels de l'équipement en tapant des commandes pour effectuer des tâches spécifiques. Il s'agit d'une interface uniquement à commande par texte qui contraste avec l'utilisation d'un de souris associée à une interface graphique (GUI).

L'interface de texte conserve de nombreux avantages par rapport aux environnements graphiques, tels que :
- une précision et une simplicité d'automatisation des tâches (mode batch) ;
- un contrôle à distance ;
- une uniformité ;
- une stabilité ; et
- une faible consommation des ressources.

Sur la figure 2, on voit que cette interface de communication utilise une connexion réseau s'appuyant sur un protocole tel que SSH (« Secured Shell ») ou Telnet. D'autres protocoles de communication sont envisageables tels que par exemple TL1, Corba, SQL ou tout autre protocole spécifique non standard.

CLI s'utilise en envoyant des commandes au format « texte » sur l'équipement. Ensuite, l'équipement renvoie le résultat de la commande par le même canal que l'envoi.

Les résultats issus de l'exécution de la commande sont de la forme textuelle et sont non-structurées, c'est-à-dire que les données sont en texte brut sans formatage.

Par exemple, on peut envoyer la commande suivante sur un routeur :

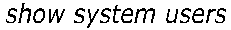

Le résultat renvoyé par le routeur est:

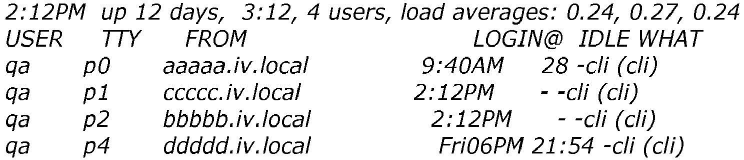

Comme on le voit sur la figure 2, d'autres formats peuvent être utilisés comme par exemple le format XML dans lequel les résultats sont structurés.

Par exemple, la commande à envoyer peut être :

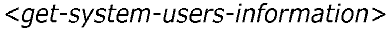

Le résultat renvoyé par le routeur est:

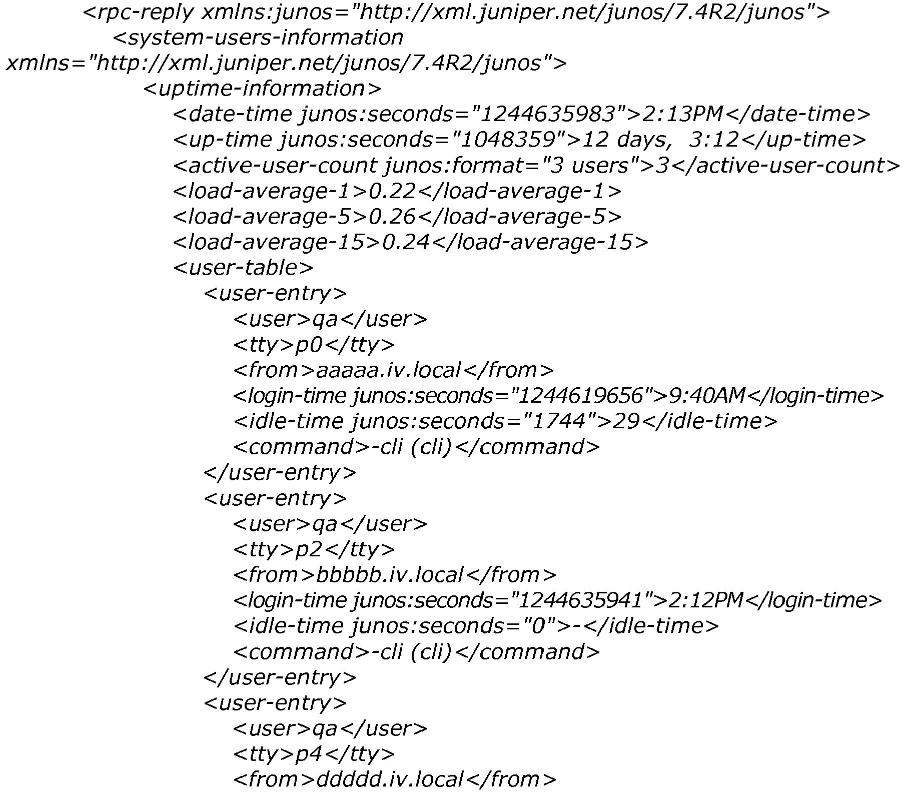

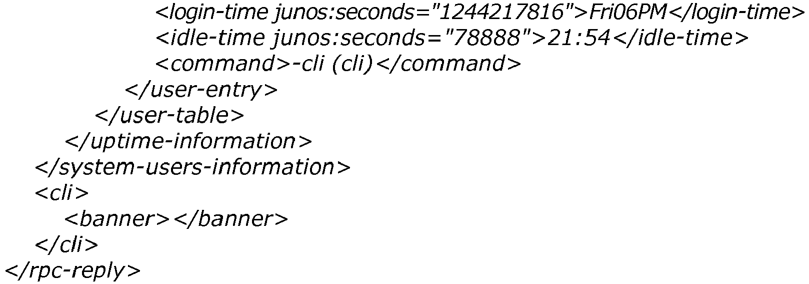

La présente invention permet d'élaborer et de transmettre des commandes dédiées vers tout équipement réseau à partir de requêtes d'acquisition de données de performance. Ces commandes sont transmises et leurs résultats sont récupérés au moyen de l'interface CLI. Ces résultats sont traités puis transmis vers un système de gestion de performance générique.

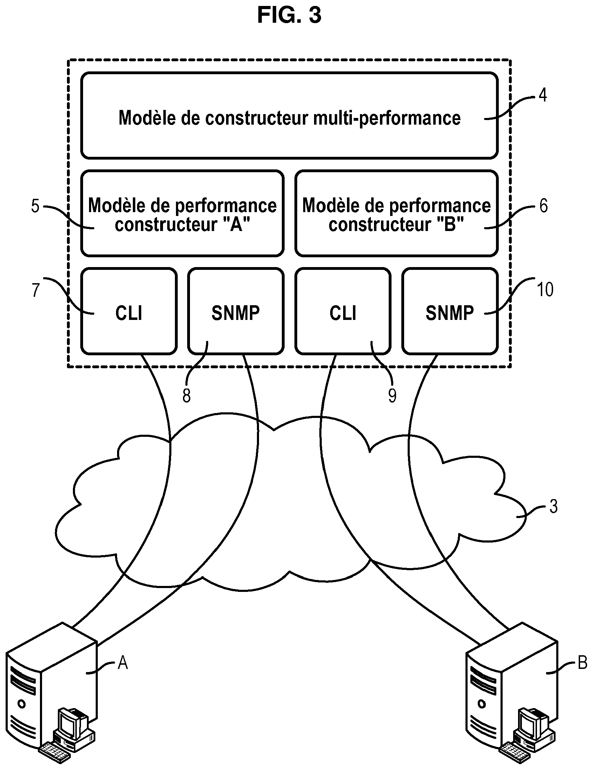

Sur la figure 3, on voit une représentation schématique d'un méta modèle au sein du serveur de gestion selon l'invention. En pratique, on élabore ce méta modèle afin de structurer les différents éléments du serveur selon l'invention et avoir une intégration complète avec éventuellement une application existante de mesure des performances et de suivi de la qualité de service. Une telle application manipule déjà des indicateurs de performance via une interface SNMP. Mais avec l'invention, cette application va également pouvoir sonder tout équipement utilisant le protocole CLI.

Sur la figure 3, on voit un modèle de performance multi-constructeurs 4 qui est un modèle générique pouvant sonder plusieurs équipements réseau ayant de caractéristiques différentes, par exemple des équipements de constructeurs différents. Ce modèle de performance comprend par exemple une application serveur de gestion de performance manipulant des indicateurs de performance. Il peut s'agir d'un modèle SMI (« Structure of Management Information ») développé à l'origine pour le protocole SNMP, que l'on enrichit afin d'intégrer de nouvelles fonctionnalités CLI.

Le modèle de performance multi-constructeurs 4 a pour objet de fournir à l'utilisateur sous forme de graphiques ou autres des informations relatives notamment à la bande passante, la consommation réseau, le trafic entrant sortant, le taux d'erreurs, les collisions, la consommation CPU, le taux d'utilisation des disques durs,...

Ce modèle de performance multi-constructeurs 4 interagit avec un modèle 5 de performance dédié à un équipement « A » (ou à un constructeur ou à un ensemble d'équipements) et avec un autre modèle 6 de performance dédié à un équipement « B » (ou à un constructeur ou à un ensemble d'équipements). Chaque modèle de performance dédié 5 et 6 comprend une description de l'équipement auquel il est dédié. Chaque modèle 5 et 6 est configuré pour servir d'aiguilleur et de convertisseur des communications entre le modèle de performance multi-constructeurs 4 et des modèles CLI et SNMP 7-10. Chaque modèle CLI comprend une interface de commande en ligne associée à un module de commande pour envoyer des scripts vers l'équipement A ou B, et un module d'analyse pour recevoir et analyser les résultats provenant de l'équipement en question. Chaque modèle SNMP communique avec l'équipement respectif par envoi de requête SNMP et échange de fichier MIB.

Les modèles CLI 7 et SNMP 8 sont dédiés à l'équipement A. Les modèles CLI 9 et SNMP 10 sont dédiés à l'équipement B. L'utilisateur a le choix soit de communiquer en SNMP soit en CLI avec chaque équipement surveillé.

L'invention est notamment remarquable par le fait qu'elle ne nécessite aucun déploiement de produits tierces sur les équipements à surveiller. En effet, tout équipement comporte une interface CLI et les protocoles utilisés sont des protocoles existants. Par ailleurs, elle est indépendante de la technologie surveillée. Elle ne repose pas sur les technologies de chaque constructeur puisqu'elle ne nécessite aucune utilisation d'une « API ».

Dans le modèle de performance multi-constructeurs 4 sont définis des indicateurs haut-niveau qui utilisent des indicateurs « orientés » équipement au sein de chaque modèle de performance dédié 5 et 6. En fonction notamment des versions du logiciel fonctionnant sur les équipements, l'utilisateur pourra ainsi choisir d'utiliser les indicateurs orientés SNMP ou CLI.

L'invention permet de modéliser des commandes et scripts CLI afin de les intégrer dans le modèle SMI. Cet enrichissement s'accompagne de caractéristiques suivantes :
- définition de scripts de commandes pour exécuter des commandes sur les équipements.
- définition de scripts d'analyse pour analyser le résultat des commandes précédemment exécutées, et
- mutualisation des commandes pour plusieurs variables afin de réduire l'impact sur l'équipement surveillé.

Afin de minimiser l'impact sur l'équipement à surveiller, on prévoit de ne pas exécuter une même commande deux fois de suite. Partant de cette contrainte, on définit avantageusement une commande associée à un groupe de variables. Définir ainsi cette commande a l'avantage de garantir la consistance des données au sein d'un même groupe car les deux variables sont valorisées au même instant.

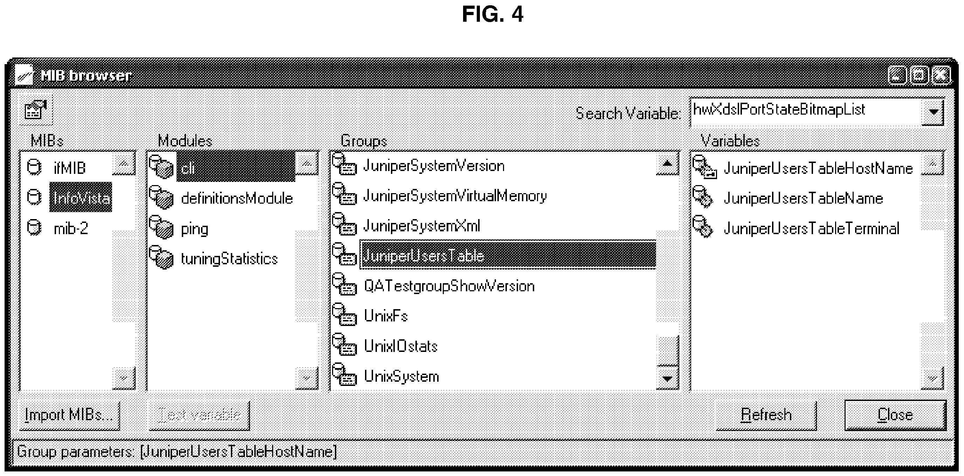

Exemple : comme on le voit sur la figure 4, on peut associer une commande à un groupe *JuniperUsersTable.* La commande est valide pour toutes les variables du groupe :
- *JuniperUsersTableHostName*
- *JuniperUsersTableName*
- *JuniperUsersTableTerminal*

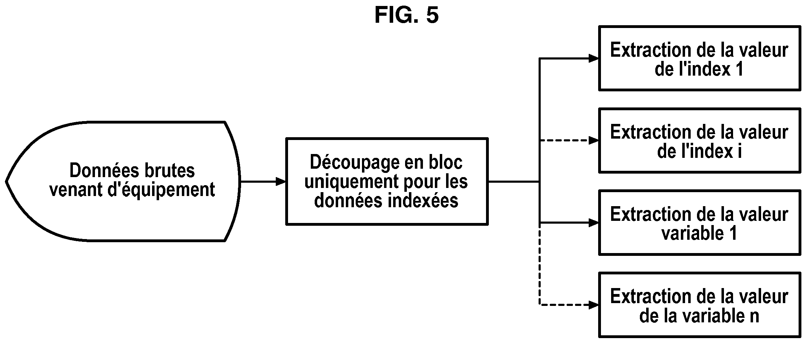

Par ailleurs, on peut définir au sein des modèles CLI, des scripts d'analyse associés à un groupe de variables (pour la gestion des données indexées) et à des variables pour l'extraction des données utiles. En effet, une fois la donnée retournée par l'équipement, il est nécessaire d'en extraire les données utiles. Afin de gérer les variables multidimensionnelles notamment, il est nécessaire d'extraire les valeurs d'index. Une variable multidimensionnelle permet de récupérer plusieurs données, par exemple un nom associé à un index. Avec ce type de variables, on peut récupérer des données sous forme de tableau ou de matrice, chaque ligne ou colonne correspondant par exemple à un utilisateur. L'extraction de telles données se fait telle qu'illustrée sur la figure 5 où l'on :
- récupère les données brutes venant de l'équipement surveillé,
- découpe en bloc uniquement les données indexées,
- extrait des valeurs d'index, et
- extrait en même temps des valeurs des variables.

Le découpage en bloc se fait via un script d'analyse qui va découper la donnée brute en blocs distinctes où il sera possible d'extraire les valeurs de chaque variable. Ce découpage se fait via un script JavaScript ou une chaine XPath (pour XML).

En reprenant l'exemple ci-dessus, le script JavaScript suivant est utilisé pour effectuer le découpage :

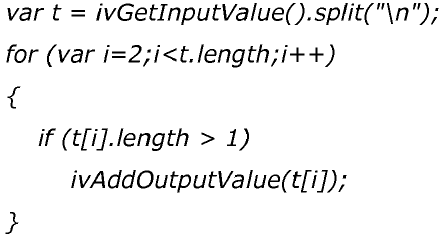

La fonction *ivGetInputValue* permet de récupérer des données venant de l'équipement.

La fonction *ivAddOutputValue* permet de transmettre des données récupérées puis traitées vers des modules d'extraction d'index et de variables.

Et cela donne un tableau de données brutes d'où les données utiles devront être extraites :

| | | | | |
|---|---|---|---|---|
| qa | p1 | ccccc.iv.local | 2:12PM | - -cli (cli) |
| qa | p2 | bbbbb.iv.local | 2:12PM | - -cli (cli) |
| qa | p4 | ddddd.iv.local | Fri06PM 21:54 | -cli (cli) |

Les données peuvent contenir un ou plusieurs index 1 à i, une ou plusieurs variables 1 à n. On prévoit autant de script d'extraction que de variables et d'index, chaque script scrutant toutes les lignes ou colonnes du tableau ou de la matrice pour récupérer la valeur d'index ou de variable souhaitée.

L'extraction des valeurs d'index ou de variables peut également se faire via un script JavaScript ou une chaine XPath (pour XML).

En reprenant l'exemple ci-dessus, le script JavaScript suivant est utilisé pour effectuer l'extraction des valeurs:

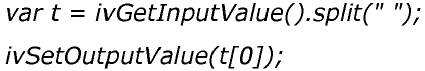

La fonction *ivSetOutputValue* permet de transmettre des données extraites vers un modèle de performance constructeur.

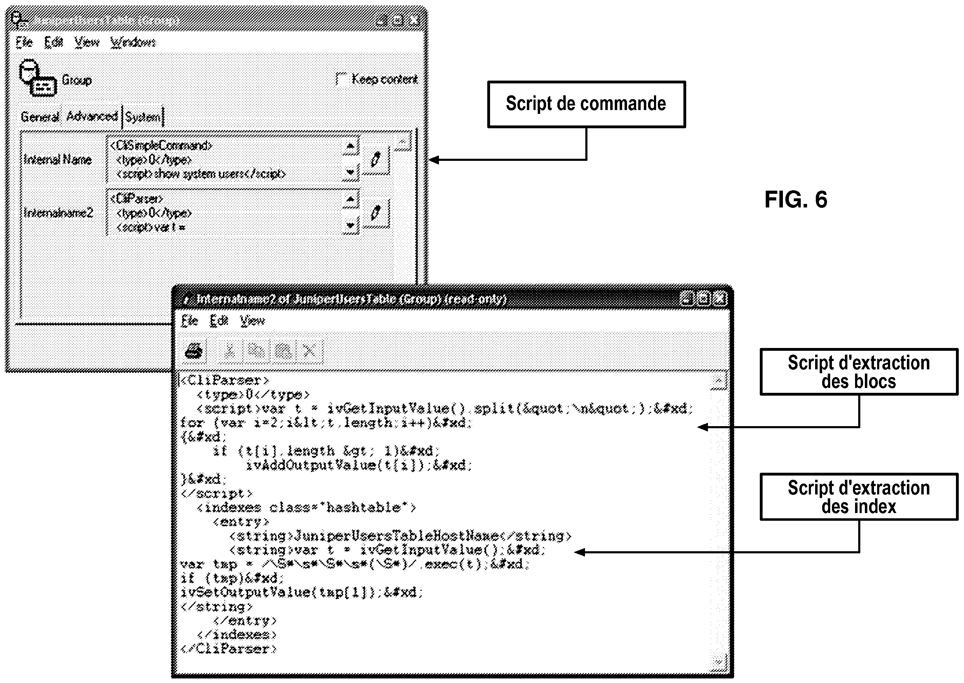

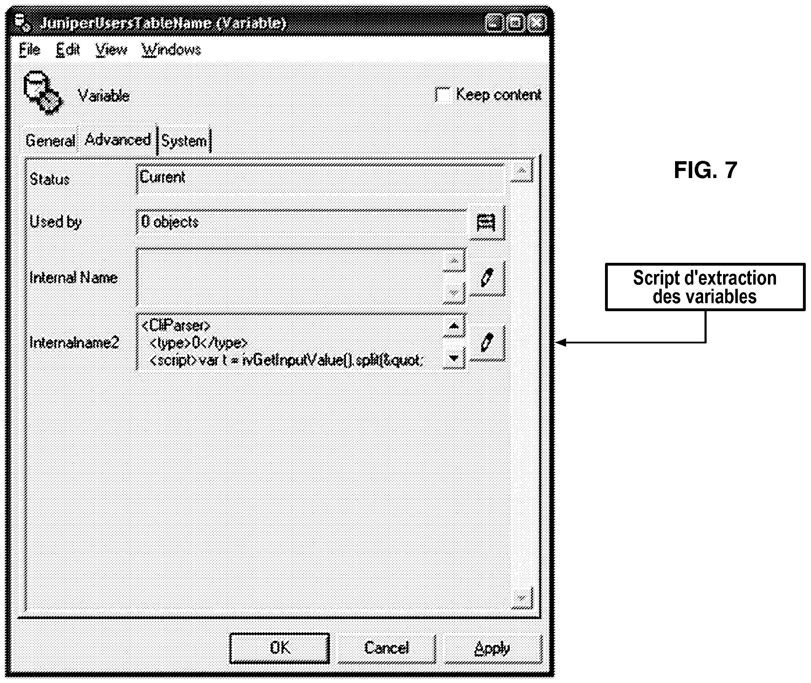

Sur la figure 6 on voit une fenêtre illustrant un script de commande et des scripts d'extraction des blocs et des index. Sur la figure 7 on voit une fenêtre illustrant des scripts d'extraction des variables.

La présente invention permet donc de :
- s'intégrer à un module de gestion de performance par SNMP existant.
- se connecter à des équipements en utilisant l'interface CLI, donc sans avoir à déployer tel ou tel logiciel sur le matériel à surveiller,
- définir les commandes à envoyer sur l'équipement,
- définir la méthode d'extraction de la donnée utile avec l'aide notamment d'un langage de programmation haut niveau, et
- gérer les problématiques d'utilisation des ressources (Processeur, mémoire) de l'équipement.

Bien sûr, l'invention n'est pas limitée aux exemples qui viennent d'être décrits et de nombreux aménagements peuvent être apportés à ces exemples sans sortir du cadre de l'invention.

## Revendications

1. Serveur de mesure de performances et de suivi de la qualité de service apte à collecter des informations de performance au sein d'un ensemble d'équipements à travers un réseau de communication, ce serveur comprenant :
- un modèle de performance générique pour
- élaborer des requêtes d'acquisition de données de performance au sein desdits équipements
- calculer des Indicateurs de performance à partir desdites données de performance, et
- fournir des rapports de performance et/ou de qualité de service,
- un modèle de performance dédié pour chaque type d'équipement ; pour un équipement donné, ce modèle de performance étant apte à acquérir des données de performance depuis ledit équipement donné en réponse aux requêtes d'acquisition,
- un modèle SNMP, intercalé entre le modèle de performance dédié et l'équipement donné, pour communiquer par requête SNMP avec un agent SNMP de l'équipement donné, et transmettre des données de performance reçues depuis cet équipement donné vers le modèle de performance dédié selon un protocole spécifique,
**Caractérisé en ce qu'**il comprend en outre, parallèlement au modèle SNMP,
- un modèle d'interfaçage, dit modèle CLI, intercalé entre le modèle de performance dédié et l'équipement donné, pour communiquer selon un mécanisme d'Interface de Ligne de Commande CLI (« Command Line Interface ») avec un agent CLI dudit équipement donné ; ce modèle CLI étant apte à générer des scripts de commande vers l'agent CLI et transmettre des données de performance reçues depuis l'équipement donné vers le modèle de performance dédié ; ce modèle CLI communiquant avec le modèle de performance dédié selon ledit protocole spécifique.

2. Serveur selon la revendication 1, **caractérisé en ce que** le modèle d'interfaçage comprend :
- un module de commande pour communiquer avec l'agent CLI de l'équipement donné, et
- au moins un module d'analyse pour analyser le résultat transmis par l'agent CLI.

3. Serveur selon la revendication 2, **caractérisé en ce que** le modèle d'analyse agit en mode non connecté avec l'agent CLI.

4. Serveur selon l'une quelconque des revendications précédentes, **caractérisé en ce que** le script de commande comprend une unique commande associée à un groupe de variables pour collecter en même temps au moins autant de données de performance que de variables.

5. Serveur selon la revendication 4, **caractérisé en ce que** lorsque les scripts de commande comprennent des variables multidimensionnelles, le modèle CLI est configuré pour recevoir des données de performance et :
- découper en bloc uniquement des données indexées,
- extraire des valeurs d'index, et
- extraire des valeurs des variables.

6. Serveur selon l'une quelconque des revendications précédentes, **caractérisé en ce que** le script de commande comprend une commande paramétrable.

7. Serveur selon la revendication 6, **caractérisé en ce que** la commande est paramétrée de façon à collecter un tableau indexé.

8. Serveur selon la revendication 6, **caractérisé en ce que** la commande est paramétrée de façon à collecter une partie d'un tableau indexé.

9. Serveur selon l'une quelconque des revendications précédentes, **caractérisé en ce que** chaque modèle d'interfaçage est configuré de façon à ne pas dépasser un nombre prédéterminé de connexions simultanées à un équipement donné.

10. Serveur selon l'une quelconque des revendications précédentes, **caractérisé en ce que** chaque modèle d'interfaçage est configuré de façon à ne pas dépasser un taux prédéterminé d'exécution de commandes sur un équipement donné.

11. Serveur selon l'une quelconque des revendications précédentes, **caractérisé en ce que** chaque modèle d'interfaçage est configuré de façon à ne pas dépasser un délai prédéterminé de déconnexion depuis un équipement après l'exécution d'un ensemble de commandes.

## Patentansprüche

1. Server zum Messen einer Leistung und zum Überwachen der Dienstqualität, der dazu geeignet ist, Leistungsinformationen innerhalb einer Anordnung von Einrichtungen durch ein Kommunikationsnetzwerk zu sammeln, wobei dieser Server enthält:
- ein generisches Leistungsmodell zum
- Ausarbeiten von Abfragen zum Erfassen von Leistungsdaten innerhalb der Einrichtungen,
- Berechnen von Leistungsindikatoren ausgehend von den Leistungsdaten, und
- Bereitstellen von Leistungs- und/oder Dienstqualitätsberichten,
- ein jeder Art von Einrichtung zugeordnetes Leistungsmodell;
wobei bei einer gegebenen Einrichtung dieses Leistungsmodell dazu geeignet ist, Leistungsdaten von der gegebenen Einrichtung in Reaktion auf Erfassungsabfragen zu erfassen,
- ein SNMP-Modell, das zwischen dem zugeordneten Leistungsmodell und der gegebenen Einrichtung eingefügt ist, um per SNMP-Abfrage mit einem SNMP-Agenten der gegebenen Einrichtung zu kommunizieren und die von dieser gegebenen Einrichtung empfangenen Leistungsdaten an das zugeordnete Leistungsmodell nach einem spezifischen Protokoll zu übertragen,
**dadurch gekennzeichnet, dass** er ferner parallel zum SNMP-Modell enthält:
- ein Schnittstellenmodell, CLI-Modell genannt, das zwischen dem zugeordneten Leistungsmodell und der gegebenen Einrichtung eingefügt ist, um nach einem CLI-("Command Line Interface"-Kommandozeilen-Mechanismus) mit einem CLI-Agenten der gegebenen Einrichtung zu kommunizieren; wobei dieses CLI-Modell dazu geeignet ist, Befehls-Skripts an den CLI-Agenten zu erzeugen und von der gegebenen Einrichtung empfangene Leistungsdaten zum zugeordneten Leistungsmodell zu übertragen; wobei dieses CLI-Modell mit dem zugeordneten Leistungsmodell nach dem spezifischen Protokoll kommuniziert.

2. Server nach Anspruch 1, **dadurch gekennzeichnet, dass** das Schnittstellenmodell enthält:
- ein Steuermodul zum Kommunizieren mit dem CLI-Agenten der gegebenen Einrichtung, und
- zumindest ein Analysemodul zum Analysieren des über den CLI-Agenten übertragenen Ergebnisses.

3. Server nach Anspruch 2, **dadurch gekennzeichnet, dass** das Analysemodul im nicht mit dem CLI-Agenten verbundenen Modus betrieben wird.

4. Server nach einem der vorangehenden Ansprüche, **dadurch gekennzeichnet, dass** das Befehls-Skript einen spezifischen Befehl enthält, der einer Gruppe von Variablen zugeordnet ist, um gleichzeitig zumindest ebenso viele Leistungsdaten wie Variablen zu sammeln.

5. Server nach Anspruch 4, **dadurch gekennzeichnet, dass** dann, wenn die Befehls-Skripts mehrdimensionale Variablen enthalten, das CLI-Modell dazu ausgelegt ist, Leistungsdaten zu empfangen und
- nur indexierte Daten in Blöcke zu unterteilen,
- Indexwerte zu extrahieren, und
- Werte der Variablen zu extrahieren.

6. Server nach einem der vorangehenden Ansprüche, **dadurch gekennzeichnet, dass** das Befehls-Skript einen parametrierbaren Befehl enthält.

7. Server nach Anspruch 6, **dadurch gekennzeichnet, dass** der Befehl so parametrierbar ist, dass eine indizierte Tabelle zusammengetragen wird.

8. Server nach Anspruch 6, **dadurch gekennzeichnet, dass** der Befehl so parametriert ist, dass ein Teil einer indizierten Tabelle zusammengetragen wird.

9. Server nach einem der vorangehenden Ansprüche, **dadurch gekennzeichnet, dass** jedes Schnittstellenmodell so ausgelegt ist, dass es nicht eine vorbestimmte Anzahl an gleichzeitigen Verbindungen zu einer gegebenen Einrichtung nicht überschreitet.

10. Server nach einem der vorangehenden Ansprüche, **dadurch gekennzeichnet, dass** jedes Schnittstellenmodell dazu ausgelegt ist, nicht eine vorbestimmte Befehlsausführungsquote an einer gegebenen Einrichtung zu überschreiten.

11. Server nach einem der vorangehenden Ansprüche, **dadurch gekennzeichnet, dass** jedes Schnittstellenmodell dazu ausgelegt ist, nach der Durchführung einer Reihe von Befehlen eine vorbestimmte Zeitspanne der Abschaltung von einer Einrichtung nicht zu überschreiten.

## Claims

1. Performance measurement and service quality monitoring server capable of collecting performance information within a set of equipment over a communication network, this server comprising:
- a generic performance model to
- produce performance data acquisition requests within said equipment
- calculate performance indicators from said performance data, and
- supply performance and/or service quality reports,
- a dedicated performance model for each type of equipment; for a given equipment, this performance model being capable of acquiring performance data from said equipment given in response to acquisition requests,
- an SNMP model, intercalated between the dedicated performance model and the equipment in question, to communicate by SNMP request with an SNMP agent for the equipment in question and transmit performance data received from this equipment in question to the dedicated performance model according to a specific protocol,
**characterised in that** it also comprises, in parallel with the SNMP model,
- an interfacing model, known as a CLI model, intercalated between the dedicated performance model and the equipment in question to communicate according to a CLI (Command Line Interface) mechanism with a CLI agent for said equipment in question; this CLI model being capable of generating command scripts to the CLI agent and transmitting performance data received from the equipment in question to the dedicated performance model; this CLI model communicating with the dedicated performance model according to said specific protocol.

2. Server according to claim 1, **characterised in that** the interfacing model comprises:
- a command module to communicate with the CLI agent for the equipment in question, and
- at least one analysis module to analyse the result transmitted by the CLI agent.

3. Server according to claim 2, **characterised in that** the analysis model acts in a mode not connected to the CLI agent.

4. Server according to any one of the preceding claims, **characterised in that** the command script comprises a unique command associated with a group of variables to collect at the same time at least as much performance data as variables.

5. Server according to claim 4, **characterised in that**, when the command scripts comprise multidimensional variables, the CLI model comprises is configured to receive performance data and:
- split only indexed data into blocks,
- extract index values, and
- extract values of variables.

6. Server according to any one of the preceding claims, **characterised in that** the command script comprises a programmable command.

7. Server according to claim 6, **characterised in that** the command is parameterized so as to collect an indexed table.

8. Server according to claim 6, **characterised in that** the command is parameterized so as to collect a part of an indexed table.

9. Server according to any one of the preceding claims, **characterised in that** each interfacing model is configured so as not to exceed a predetermined number of simultaneous connections to a given piece of equipment.

10. Server according to any one of the preceding claims, **characterised in that** each interfacing model is configured so as not to exceed a predetermined rate of execution of commands on a given piece of equipment.

11. Server according to any one of the preceding claims, **characterised in that** each interfacing model is configured so as not to exceed a predetermined period of disconnection from a piece of equipment following execution of a set of commands.
